Europäisches Patentamt

European Patent Office

Office européen des brevets

(11) Publication number: **0 391 344**
**A2**

## (12) EUROPEAN PATENT APPLICATION

(21) Application number: **90106358.6**

(51) Int. Cl.⁵: **B62B 9/04**

(22) Date of filing: **03.04.90**

(30) Priority: **04.04.89 IL 89842**

(43) Date of publication of application:
**10.10.90 Bulletin 90/41**

(84) Designated Contracting States:
**AT BE CH DE DK ES FR GB GR IT LI NL SE**

(71) Applicant: **Nagirner, Dina**
**Kaplinsky 8/3**
**Rishon Le-Zion(IL)**

Applicant: **Haham, Zila**
**Ein Hanoh 14/16**
**Gany Tikva(IL)**

(72) Inventor: **Nagirner, Dina**
**Kaplinsky 8/3**
**Rishon Le-Zion(IL)**
Inventor: **Haham, Zila**
**Ein Hanoh 14/16**
**Gany Tikva(IL)**

(74) Representative: **Modiano, Guido et al**
**MODIANO, JOSIF, PISANTY & STAUB**
**Modiano & Associati Baaderstrasse 3**
**D-8000 München 5(DE)**

(54) **Manually-propellable wheeled vehicle with obstacle-negotiating device.**

(57) A manually-propellable wheeled vehicle, such as a baby stroller includes a pair of skids extending longitudinally of the frame and pivotally mounted at their rear ends on an axis extending tranversely of the frame, and releasably retained either: (a) in a retracted, non-operative position to permit the vehicle to be manually propelled along a supporting surface, or (b) in an extended, operative position wherein their front ends are lowered to engage the inner surface of a stair, curb, or other obstacle in the supporting suface, and thereby to permit the wheeled vehicle to be slid on the skids over the obstacle.

FIG 2

# MANUALLY-PROPELLABLE WHEELED VEHICLE WITH OBSTACLE-NEGOTIATING DEVICE

The present invention relates to manually-propellable wheeled vehicles including a device for negotiating an obstacle, such as stairs, or a curb. The invention is particularly useful for baby strollers and carriages, and is therefore described below with respect to this application, but it will be appreciated that it could also be used in other forms of wheeled vehicles, such as invalid chairs, wheelbarrows, dollies, hand trucks and the like.

A number of devices have been proposed for use with wheeled vehicles to facilitate moving up and down stairs, over curbs, and other obstacles. The known proposed devices generally include lifting mechanisms which actually lift the vehicle or which serve as a fulcrum to permit manually lifting the vehicle. Examples of the known devices are described in U.S. Patents 1,911,924, 1,959,810, 3,573,877, 3,175,835 and 1,334,726. However, insofar as we are aware, such devices have not found widespread use, probably because of their inability to conveniently negotiate a series of stairs, (as distinguished from a curb), or because of the relatively large amount of energy required to actually lift the wheeled vehicle, or because of their relatively complicated structures.

An object of the present invention is to provide a manually-propellable wheeled vehicle having advantages in all of the above respects.

According to the present invention, there is provided a manually-propellable wheeled vehicle comprising a frame including a support for carrying a load, at least one wheel rotatably mounted on the front end of the frame along a first axis extending tranversely of the frame, and a handle at the rear end of the frame for manually pushing or pulling the vehicle along the ground or other supporting surface; characterized in that said wheeled vehicle further comprises: at least one skid extending longitudinally of the frame and pivotally mounted at its rear end on a second axis extending tranversely of the frame between said first axis and said handle, and inwardly of the outer face of said wheel; and releasable retainer means for releasably retaining said skid either: (a) in a retracted, non-operative position wherein its front end is also located inwardly of the outer surface of said wheel to permit the vehicle to be manually propelled along the supporting surface, or (b) in an extended, operative position wherein said skid is pivoted so that its front end is lowered to engage the inner surface of a stair, curb, or other obstacle in the supporting surface, and thereby to permit the wheeled vehicle to be slid on said skid over the obstacle.

In the preferred embodiment of the invention described below, the wheeled vehicle is a baby stroller and includes two skids in spaced parallel relation pivotally mounted at opposite sides of the frame on the second transverse axis, and releasably retained by the retainer means in either their retracted or extended positions.

Such a construction for wheeled vehicles facilitates negotiating not only single obstacles such as curbs, but also a succession of obstacles, such as a series of stairs. The negotiation of such obstacles is easily done by sliding the vehicle on its skid (or skids) over the obstacle, which requires less energy than actually raising the vehicle with respect to the obstacle. The device can be supplied as an accessory to an existing vehicle, or can be incorporated in the manufacture of such vehicles.

Further features and advantages of the invention will be apparent from the description below.

The invention is herein described, by way of example only, with reference to the accompanying drawings, wherein:

Fig. 1 illustrates one form of manually-propellable wheeled vehicle, namely a baby stroller, constructed in accordance with the present invention;

Fig. 2 illustrates how the baby stroller of Fig. 1 negotiates a series of stairs;

Fig. 3 is an enlarged fragmentary view illustrating the retracted position of the stair-negotiating device;

Fig. 4 is a fragmentary view illustrating the operative position of the stair-negotiating device;

Fig. 5 is a fragmentary view illustrating details of the stair-negotiating device when in its operative position;

Fig. 6 is a fragmentary view illustrating the retracted position of one of the movement-arresting legs in the stair-negotiating device of Fig. 4; and

Fig. 7 is a detailed view more particularly illustrating the retracted position of the movement-arresting leg shown in Fig. 6.

The wheeled vehicle illustrated in the drawings is a baby stroller. It comprises a frame 2, including a support for carrying a load namely a seat 4, and leg rest 5 for a baby. The frame is mounted on a first pair of double-wheels 6 rotatably mounted on opposite sides of the front end of the frame, and a second pair of double-wheels 8 rotatably mounted on opposite sides of the rear end of the frame. The baby stoller further includes a handle 10 (Fig.2) at the rear end of the frame for manually pushing or pulling the stroller on its wheels along the ground or other supporting surface.

Such baby strollers are well known, and therefore further details of its construction are not setforth herein.

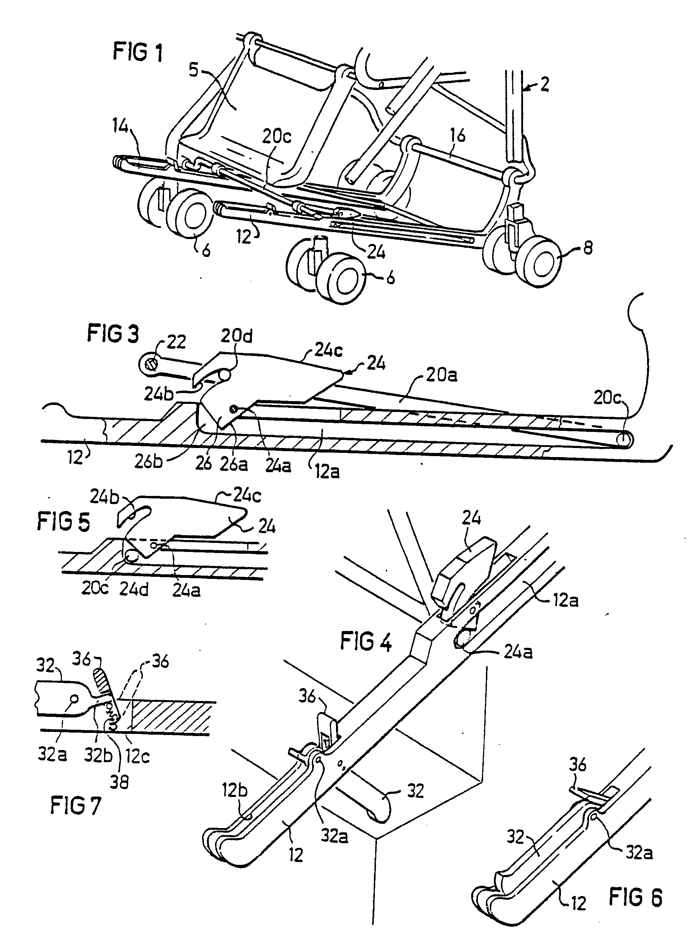

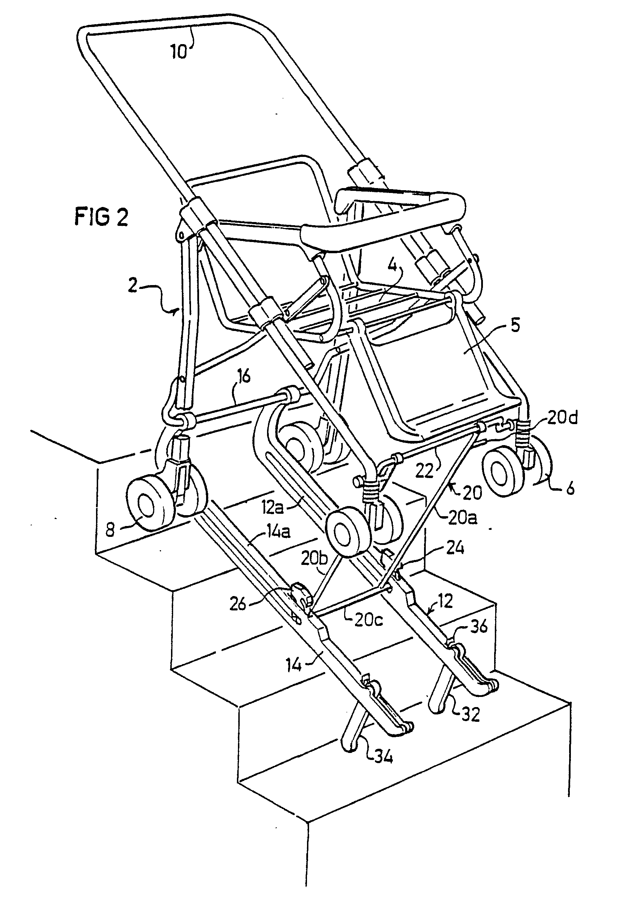

The illustrated baby stroller further includes a pair of skids 12, 14 extending longitudinally of the frame 2 and pivotally mounted to the frame along a bar 16 which is located on a transverse axis between the transverse axes of the front wheels 6 and of the handle 10. Skids 12, 14 are releasably retained either (a) in a retracted, non-operative position as illustrated in Fig. 1, wherein the front ends of the skids are located inwardly of the outer surface of the front wheels 6 to permit the stroller to be manually propelled on its wheels along the ground or other supporting surface; or (b) in an extended, operative position wherein the front ends of the skids are lowered so as to be located outwardly of the outer surfaces of the front wheels 6. The latter position is illustrated in Fig. 2, wherein it will be seen that the skids 12, 14 when in their extended positions, engage the outer surfaces of the stairs (or curb or other obstacle) to be negotiated, and thereby permit the stroller to be slid on the skids over the stairs.

The illustrated stroller further includes releasable retainer means for releasably retaining the skids 12, 14 in either its retracted, non-operative position (Fig. 1) or in its extended, operative position (Fig. 2). Such retainer means comprises a bail 20 having a pair of legs 20a, 20b, pivotally mounted to a frame member 22 at the front end of the frame 2, and a transversely-extending connecting leg 20c slidably received within slots 12a, 14a formed in the skids 12, 14. The retainer means further includes a catch 24, 26 pivotally mounted to each skid 12, 14 adjacent the front end of its slot 12a, 14a.

As shown particularly in Fig. 3 with respect to skid 12 and catch 24, each catch is pivotally mounted on a pin 24a. Each catch includes a first formation in the form of a slot 24b receiving a pin 20d carried by the respective leg 20a of the bail adjacent its free end, i.e., remote from the bail connecting leg 20c. When the bail pin 20d is received within slot 24d as illustrated in Fig. 3, the catch locks the skid in its retracted, non-operative position.

Each catch includes a second formation, in the form of a projection 26, which is engageable with the bail connecting leg 20c to lock the bail, and thereby the skids 12, 14 in their extended, operative positions as more particularly illustrated in Figs. 2, 4 and 5. As shown in Fig. 3, projection 26 includes an inclined surface 26a facing the bail connecting leg 20c, which inclined surface is forwardly of the pivot point 24a of the catch 24. When the bail 20 is to be extended to move the skids 12,14 to their operative positions (Figs. 2 and 4), connecting leg 20c engages inclined surface 26a to pivot the catch 24 (clockwise, Fig. 3), permitting the leg to move to the opposite side of the projection and to engage inclined surface 26b of the projection (Fig. 5). The bail will thus be locked in this position since a force applied by connecting leg 20c to inclined surface 26d will not be able to pivot the catch 24 clockwise in order to permit bail leg to pass.

In order to release the bail 20, and thereby the skids 12,14, from their extended, operative positions, it is necessary to depress fingerpiece 24c of catch 24 (and a similar fingerpiece on catch 26) to pivot the catches clockwise, whereupon the bail connecting leg 20c may then pass the projection 26 to enable moving the bail and the two skids 12, 14 to their retracted, non-operative positions as illustrated in Figs. 1 and 3.

Each of the skids 12, 14 further includes a movement-arresting leg 32, 34 pivotally mounted adjacent the front end of its respective skid 12, 14. As shown particularly in Figs. 4, 6 and 7 with respect to a leg 32 on skid 12, leg 32 is pivotally mounted at its rear end, by pin 32a, within a slot or bifurcation 12b formed in the front end of its skid 12. Leg 32 is normally retained in a retracted, non-operative position within slot 12b by a projecting tongue 32b (Fig. 7) received within an opening formed in a pivotally mounted catch or fingerpiece 36 urged towards the leg by a spring 38. When catch 36 is pivoted away from leg 32 (to the broken-line position illustrated in Fig. 7), it disengages from tongue 32b of leg 32, thereby permitting the leg to pivot downwardly to its extended, operative position as illustrated particularly in Figs. 2 and 4.

When the two legs 32, 34 are released by their fingerpieces 36 and are in their extended, operative positions as shown in Figs. 2 and 4, they engage the upper surface of each step and arrest rearward-movement of the stroller as the stroller is being pulled up along the stairs on its skids 12, 14. Thus, the upper corner of each stair will pivot the two legs 32, 34 (clockwise, Fig. 4) to their non-operative positions within their respective slots (e.g. 12b) at the front end of their respective skids; but as soon as the legs clear the corner of the stair, they will automatically pivot (counter-clockwise, Fig. 4) by their own weight to their extended, operative positions (shown in Figs. 2 and 4) so as to be engageable with the upper surface of the next step. Legs 32, 34 are limited in their counter-clockwise movement (e.g. by edge 12c in skid 12), and therefore will arrest any downward movement of the stroller as it is being pulled up along the stairs.

The manner of using the illustrated stroller for negotiating stairs, curbs or other obstacles, will be apparent from the above description. Thus, in the normal operation of the stroller, both of the skids 12, 14 are in their retracted, non-operative positions as illustrated in Fig. 1, and are locked in that position by their catches 24, 26 receiving the pins (e.g. 20d, Fig. 3) at the free ends of the bail legs 20a, 20b. In addition, the movement-arresting legs 32, 34 are also locked in their retracted, non-operative positions within the slots (e.g. 12b, Fig. 4) at the front end of their respective skids 12, 14.

When it is desired to negotiate stairs (or other obstacles), the catches 24, 26 are depressed inwardly to pivot them (clockwise, Fig. 3), thereby to release the pins (e.g. 20d) from their respective slots (e.g. 24b). The bail 20 may then be moved to its extended position as illustrated in Figs. 2 and 4, and is locked in that position by the bail connecting leg 20c engaging e.g., surface 26b of the catch 24 (Fig. 3). At the same time, the two catches (e.g. 36, Figs.4, 6 and 7) locking their respective movement-arresting legs 32, 34 in their retracted position, are pressed in order to release the legs. Thus, when the two legs 32, 34 engage a corner of a step, they automatically pivot (clockwise, Figs. 4, 6,7) towards their retracted positions to enable the skids to clear the corner; but as soon as the corner is cleared, they automatically drop to their operative positions (e.g. Fig. 4) to engage the upper surface of the next step and thereby to arrest any rearward movement of the stroller.

While the invention has been described with respect to one preferred embodiment, it is to be understood that this is set forth merely for purposes of example, and that many variations, modifications and other applications of the invention may be made. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A manually-propellable wheeled vehicle comprising a frame including a support for carrying a load, at least one wheel rotatably mounted on the front end of the frame along a first axis extending tranversely of the frame, and a handle at the rear end of the frame for manually pushing or pulling the vehicle along the ground or other supporting surface;
characterized in that said wheeled vehicle further comprises:
at least one skid extending longitudinally of the frame and pivotally mounted at its rear end on a second axis extending tranversely of the frame between said first axis and said handle, and inwardly of the outer face of said wheel;
and releasable retainer means for releasably retaining said skid either:
(a) in a retracted, non-operative position wherein its front end is also located inwardly of the outer surface of said wheel to permit the vehicle to be manually propelled along the supporting surface, or
(b) in an extended, operative position wherein said skid is pivoted so that its front end is lowered to engage the inner surface of a stair, curb, or other obstacle in the supporting suface, and thereby to permit the wheeled vehicle to be slid on said skid over the obstacle.

2. The wheeled vehicle according to Claim 1, wherein there are two skids in spaced parallel relation pivotally mounted at opposite sides of the frame along said second transverse axis, and releasably retained by said retainer means in either their retracted or extended positions.

3. The wheeled vehicle according to Claim 2, wherein said wheeled vehicle includes a first pair of wheels rotatably mounted on opposite sides of the front end of the vehicle, and a second pair of wheels rotatably mounted on opposite sides of the rear end of the vehicle.

4. The wheeled vehicle according to either of Claims 2 or 3, wherein said retainer means includes a bail having a pair of legs pivotally mounted to the front end of the frame, and a connecting leg extending tranversely of the frame and slidably engageable with the pair of skids for supporting them in their extended positions.

5. The wheeled vehicle according to Claim 4, wherein said connecting leg of the bail is slidably received within slots formed in said pair of skids.

6. The wheeled vehicle according to either of Claims 4 or 5, wherein said retainer means comprises a catch on each of said skids adjacent the location of said connecting leg of the bail in the extended position of the skids, said catch including a first formation engageable with said bail for locking it in the retracted position of said skids, and a second formation engagable with said bail for locking it in the extended position of said skids.

7. The wheeled vehicle according to Claim 6, wherein each of said catches is pivotally mounted to its respective skid, said first formation comprising a slot in the catch receiving a pin at the front end of the respective leg of the bail when supporting the skids in their retracted positions for locking them in their retracted positions, said second formation comprising a projection on said catch engageable with said connecting leg of the bail when the skids are in their extended positions for locking them in their extended positions.

8. The wheeled vehicle according to any one of Claims 1-7, wherein each skid further includes a movement-arresting leg pivotally mounted at its rear end adjacent to the front end of each skid either to a retracted, non-operative position substantially parallel to its respective skid, or to an extended, operative position projecting below its respective skid, each skid including a stop for limiting the pivotal movement of its respective movement-arresting leg in the rearward direction, such that said legs permit the wheeled vehicle to ascend the obstacle but arrest movement of the vehicle in the descending direction.

9. The wheeled vehicle according to Claim 8, wherein the front end of each skid is formed with a slot for nestably receiving its respective movement-arresting leg when in its retracted position.

10. The wheeled vehicle according to either of Claims 8 or 9, wherein each skid includes a second catch for retaining its respective movement-arresting leg in its retracted position.

FIG 1

FIG 3

FIG 5

FIG 7

FIG 4

FIG 6

FIG 2